# EUROPÄISCHE PATENTSCHRIFT

(11) **EP 4 409 161 B1**
(45) Veröffentlichungstag und Bekanntmachung des Hinweises auf die Patenterteilung: **05.11.2025**
(21) Anmeldenummer: 22769744.8
(22) Anmeldetag: 05.09.2022
(51) Int. Cl.: F16H 57/00, H02K 7/00

(54) **ELEKTRISCHE ANTRIEBSEINRICHTUNG**
ELECTRIC DRIVE DEVICE
DISPOSITIF D'ENTRAÎNEMENT ÉLECTRIQUE

(30) Priorität: 01.10.2021 DE 102021211080
(43) Veröffentlichungstag der Anmeldung: 07.08.2024
(73) Patentinhaber: Robert Bosch GmbH, 70442 Stuttgart (DE)
(72) Erfinder: BORZSEY, Andor, 1032 Budapest (HU)
(86) Internationale Anmeldenummer: PCT/EP2022/074575
(87) Internationale Veröffentlichungsnummer: WO 2023/052040

(56) Entgegenhaltungen:
- EP-A1- 2 120 315
- DE-A1- 102011 010 204
- DE-A1- 102018 104 685
- US-A- 6 074 165

## Beschreibung

### Technisches Gebiet

Die Erfindung bezieht sich auf eine elektrische Antriebseinrichtung mit einem E-Maschinenteil und einem Getriebeteil, wobei eine Rotorwelle mit einer Getriebeeingangswelle innerhalb eines Verbindungsbereichs zur Drehmomentübertragung gekoppelt ist. Darüber hinaus bezieht sich die Erfindung auf die Verwendung der elektrischen Antriebseinrichtung in einem elektrisch angetriebenen Fahrzeug, insbesondere einem elektrisch angetriebenen Personenkraftwagen oder einem elektrisch angetriebenen leichten Nutzfahrzeug.

### Stand der Technik

DE 10 2012 210 682 A1 offenbart eine elektrische Maschine mit einer Rotorwelle, welche ein Ritzel zur Übertragung von Drehmomenten auf ein Planetengetriebe aufweist. Die Rotorwelle der elektrischen Maschine ist an ihren beiden Enden gelagert, wobei Rotor und Ritzel zwischen den beiden Lagerungen angeordnet sind. Die Lagerung an einem Ende der Rotorwelle erfolgt im Maschinengehäuse, die Lagerung des anderen Endes der Rotorwelle erfolgt in einer Sacklochbohrung einer Abtriebswelle.

DE 10 2012 203 809 A1 zeigt eine elektrische Maschine mit einer Rotorwelle, bei der sich alle Komponenten, die auf der Rotorwelle angeordnet sind, zwischen zwei Lagerungen befinden. Auf der offenbarten Rotorwelle ist zusätzlich zum Rotor und zu einem Ritzel, welches in den Planetenträger eines Planetengetriebes eingreift, eine Vorrichtung zur axialen Bewegung beziehungsweise zur axialen Fixierung der Rotorwelle zwischen ihren beiden Lagerungen angeordnet.

Bei Auslegungen einer elektrischen Antriebseinrichtung mit einer Rotorwelle kann es aufgrund einer das Drehmoment übertragenden Verbindung zwischen einer Getriebeeingangswelle und einer Rotorwelle zu Vibrationen kommen. Diese Vibrationen rühren aus der Verbindung zwischen Getriebeeingangswelle und Rotorwelle her. Vibrationen können sowohl bei einer Drehrichtung der elektrischen Maschine in Vorwärtsfahrt als auch bei einer Rotation der elektrischen Maschine in Rückwärtsfahrt auftreten.

Weitere elektrische Antriebsvorrichtungen sind bekannt aus der DE 10 2011 010204 A1, der EP 2 120 315 A1, der DE 10 2018 104685 A1 und der US 6 074 165 A. Das Dokument DE 10 2011 010204 A1 offenbart eine elektrische Antriebseinrichtung mit einem E-Maschinenteil und einem Getriebeteil, wobei eine Rotorwelle mit einer Getriebeeingangswelle innerhalb eines Verbindungsbereichs derart gekoppelt ist, dass eine Drehmomentübertragung erfolgt, wobei in dem Verbindungsbereich eine Axialverbindung zwischen der Rotorwelle und der Getriebeeingangswelle ausgebildet ist, wobei die Axialverbindung einen Haltering aufweist, der auf der Rotorwelle aufgenommen ist und ein scheibenförmiges Element abstützt.

### Darstellung der Erfindung

Erfindungsgemäß wird eine elektrische Antriebseinrichtung vorgeschlagen, die einen E-Maschinenteil und einen Getriebeteil umfasst, wobei eine Rotorwelle mit einer Getriebeeingangswelle derart gekoppelt wird, dass innerhalb eines Verbindungsbereichs eine Drehmomentübertragung erfolgt und im Verbindungsbereich zwischen der Rotorwelle und der Getriebeeingangswelle eine Axialverbindung ausgeführt ist.

Durch die Axialverbindung zwischen der Rotorwelle der elektrischen Maschine einerseits und der Getriebeeingangswelle des Getriebes andererseits werden Axialkräfte, die zum Auftreten von Vibrationen führen können, wirkungsvoll in die Wälzlager, welche insbesondere die Getriebeeingangswelle drehbar lagern, und in ein die Wälzlager abstützendes Gehäuse abgeleitet. Dies gilt für beide Drehrichtungen der elektrischen Maschine, d. h. für Rückwärtsfahrt und für Vorwärtsfahrt eines elektrisch angetriebenen Fahrzeugs.

Erfindungsgemäß ist die Getriebeeingangswelle als Hohlwelle ausgeführt, deren Innenmantel im Verbindungsbereich die Ritzelwelle umschließt. Dadurch wird eine kompakte Ausgestaltung des Verbindungsbereichs erreicht, innerhalb dessen beispielsweise eine Mantelfläche der Rotorwelle, die mit einer Mehrkeilverbindung oder dergleichen versehen ist, mit einer komplementär ausgebildeten Geometrie an der Innenmantelfläche der Hohlwelle zusammenwirkt. Damit kann eine Übertragung auch höchster Drehmomente realisiert werden, ohne dass die Materialbeanspruchung punktuell unzulässig hohe Werte erreicht.

Erfindungsgemäß weist die Axialverbindung einen Haltering auf, der auf der Rotorwelle aufgenommen ist und ein scheibenartiges Element abstützt. Der Haltering kann beispielsweise in einer Nut auf dem Umfang der Rotorwelle aufgenommen sein, als Sprengring beispielsweise ausgebildet werden, wohingegen das scheibenförmige Element beispielsweise als eine Tellerfeder ausgebildet sein kann.

Erfindungsgemäß liegt das scheibenförmige Element an einer Umfangsschulter des Innenmantels der Getriebeeingangswelle an und ist als Tellerfeder ausgeführt.

In weiterer Ausgestaltung der elektrischen Antriebseinrichtung kann der Haltering als ebener Ring, als in Umfangsrichtung gewellter Ring oder als konischer Ring ausgeführt sein. Durch die Varianz hinsichtlich der Geometrien des Halterings kann verschiedenen Einsatzbedingungen sowie jeweils zu übertragenden Axialkräften auf einfache Art und Weise Rechnung getragen werden.

In einer weiteren Ausgestaltung der elektrischen Antriebseinrichtung kann die Axialverbindung derart ausgestaltet sein, dass diese eine Kontermutter aufweist, die mit einem Sprengring zusammenwirkt.

In einer weiteren möglichen Ausgestaltungsvariante der erfindungsgemäß vorgeschlagenen elektrischen Antriebseinrichtung ist die Axialverbindung derart beschaffen, dass diese eine Tellerfeder umfasst, die mittels einer Schraubverbindung an einer Stirnseite der Rotorwelle befestigt ist.

In einer weiteren vorteilhaften Ausgestaltungsmöglichkeit der erfindungsgemäßen elektrischen Antriebseinrichtung ist die Umfangsschulter am Innenmantel der Getriebeeingangswelle als Durchmesserverringerung ausgeführt. Je nach Anforderungen an die Geometrie der Umfangsschulter und der zu übertragenden Axialkräfte, Vorwärtsfahrt und Rückwärtsfahrt, kann die Umfangsschulter an die auftretenden Axialkräfte angepasst werden und ist insbesondere auf fertigungstechnisch einfache Weise bei der Herstellung und Anpassung der Hohlwelle als Getriebeeingangswelle herstellbar.

In weiterer vorteilhafter Ausgestaltung der erfindungsgemäß vorgeschlagenen elektrischen Antriebseinrichtung erfolgt durch die Axialverbindung zwischen der Rotorwelle und der Getriebeeingangswelle ein Kraftfluss durch das zweite Lager in ein Gehäuse.

Des Weiteren ist hervorzuheben, dass bei der erfindungsgemäßen elektrischen Antriebseinrichtung die Axialverbindung zwischen der Rotorwelle und der Getriebeeingangswelle einen Kraftfluss durch das zweite Lager bewirkt, entsprechend der jeweiligen Drehrichtung der Rotorwelle. Dadurch kann die Ableitung der Axialkraft über das Wälzlager für beide Drehrichtungen der elektrischen Maschine, d. h. für Rückwärtsfahrt und für Vorwärtsfahrt, in das Gehäuse erfolgen, sodass Vibrationseffekte nicht auftreten können.

Darüber hinaus bezieht sich die Erfindung auf die Verwendung der elektrischen Antriebseinrichtung in einem elektrisch angetriebenen Fahrzeug, insbesondere einem elektrisch angetriebenen Personenkraftwagen oder einem elektrisch angetriebenen leichten Nutzfahrzeug.

### Vorteile der Erfindung

Durch die erfindungsgemäß vorgeschlagene Lösung besteht die Möglichkeit, die Rotorwelle der elektrischen Maschine einerseits mit der Getriebeeingangswelle des Getriebes andererseits zu verbinden. Dadurch können die Nachteile, insbesondere das Auftreten von Vibrationen bei einer angestellten Lagerung, insbesondere einem X-Lagerungs-Konzept, vermieden werden und die axiale Position der Rotorwelle der elektrischen Maschine ist wohl definiert. Durch die erfindungsgemäß vorgeschlagene Axialverbindung besteht die Möglichkeit, ein weiteres der die Rotorwelle aufnehmenden Wälzlager nicht mit einer Vorspannkraft zu beaufschlagen. Darüber hinaus besteht durch die Anwendung des erfindungsgemäß vorgeschlagenen Konzepts die Möglichkeit, dieses Wälzlager hinsichtlich seiner Größe kleiner auszulegen, da dieses Lager der erfindungsgemäß vorgeschlagenen Lösung folgend keinerlei Axialkräfte aufzunehmen hat. Die Axialkräfte werden bei einer Dreipunktlagerung der Rotorwelle samt Getriebeeingangswelle nur durch das mittlere, d. h. das zweite, Lager aufgenommen und in das Gehäuse eingeleitet. Durch die erfindungsgemäß vorgeschlagene Lösung lässt sich insbesondere eine Vibration der Rotorwelle abstellen, da eine Axialverschiebung der Rotorwelle aufgrund der diese definierte Position haltenden Axialverbindung gewährleistet ist. Die definierte Position der Rotorwelle und der damit verbundenen Getriebeeingangswelle in axiale Richtung über die erfindungsgemäß vorgeschlagene Axialverbindung zwischen diesen beiden Bauteilen erlaubt einen vibrationsfreien Lauf, sowohl bei der Drehrichtung der elektrischen Maschine in Vorwärtsfahrtrichtung als auch bei der Drehrichtung der elektrischen Maschine in Rückwärtsfahrtrichtung.

Des Weiteren kann eine Vielzahl von Wälzlagertypen eingesetzt werden. Anstelle des mit einer Vorspannung beaufschlagten X-Lagerungs-Konzepts, kann über die erfindungsgemäß vorgeschlagene Axialverbindung zwischen der Getriebeeingangswelle und der mit dieser verbundenen Rotorwelle die Rotorwelle in axialer Position gehalten werden. Damit lässt sich ein Fest-Los-Lagerungsprinzip anstelle einer angestellten X-Lagerung verwirklichen, bei der das Auftreten von in axiale Richtung wirksamen Vibrationen nicht vollständig ausgeschlossen werden kann. Durch die erfindungsgemäß vorgeschlagene Lösung wird diesem Nachteil wirksam entgegengetreten.

### Kurze Beschreibung der Zeichnungen

Anhand der Zeichnungen wird die Erfindung nachstehend eingehender beschrieben.

Es zeigen:
- Figur 1: eine angestellte X-Lagerung einer Rotorwellen/Getriebeeingangswellen-Kombination einer elektrischen Antriebseinrichtung,
- Figur 2: ein Detail aus Figur 1, den Verbindungsbereich zwischen der Getriebeeingangswelle und der Rotorwelle darstellend,
- Figur 3: eine Ausgestaltungsmöglichkeit der erfindungsgemäß vorgeschlagenen Axialverbindung zwischen der Getriebeeingangswelle und der Rotorwelle und
- Figur 4: einen sich einstellenden Kraftverlauf im Zusammenhang mit der Axialverbindung zwischen der Getriebeeingangswelle einerseits und der Rotorwelle andererseits.

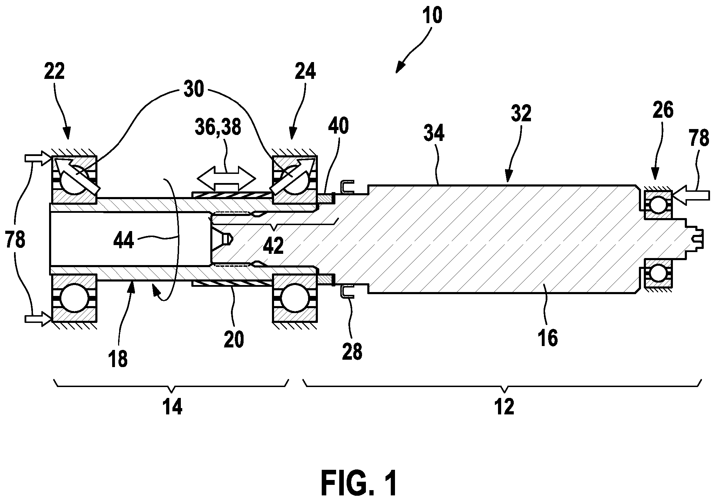

Figur 1 zeigt eine elektrische Antriebseinrichtung 10, einen E-Maschinenteil 12 und einen Getriebeteil 14 umfassend. Im E-Maschinenteil 12 der elektrischen Antriebseinrichtung 10 verläuft eine Rotorwelle 16, die mit einer Getriebeeingangswelle 18 zur Drehmomentübertragung 44 gekoppelt ist. Auf dem Umfang der Getriebeeingangswelle 18 befindet sich eine Laufverzahnung 20 oder ein Ritzel. Die Anordnung aus Rotorwelle 16 und Getriebeeingangswelle 18 ist in einem nicht näher dargestellten Gehäuse der elektrischen Antriebseinrichtung 10 in einem ersten Lager 22, einem zweiten Lager 24 und einem dritten Lager 26 drehbar gelagert. Der Antrieb der Rotorwelle 16 erfolgt über die elektrische Antriebseinrichtung 10, die hier nicht näher dargestellt ist.

Aus der Darstellung gemäß Figur 1 geht des Weiteren hervor, dass der E-Maschinenteil 12 vom Getriebeteil 14 durch einen Radialwellendichtring 28 getrennt ist. Das erste Lager 22 sowie das zweite Lager 24 sind in einer vorgespannten X-Anstellung 30 ausgeführt; ein Sitz für einen nicht näher dargestellten Rotor der elektrischen Antriebseinrichtung 10 an der Mantelfläche 34 der Rotorwelle 16 ist durch Position 32 bezeichnet. Aufgrund der vorgespannten X-Anstellung 30 des ersten Lagers 22 gegen das zweite Lager 24 stellt sich ausgehend von der Laufverzahnung 20 je nach Drehrichtung der Rotorwelle 16, d. h. bei Vorwärtsfahrt oder Rückwärtsfahrt, eine Axiallast 36 ein, die in die beiden Wirkungsrichtungen 38 entsprechend des in Figur 1 eingetragenen Doppelpfeils wirken.

Im Bereich des zweiten Lagers 24 befindet sich ein Kontaktring 40, welcher den Kontaktbereich zwischen der Getriebeeingangswelle 18 und der Rotorwelle 16 markiert. In diesem Bereich kommt es bei Ausbildung der vorgespannten X-Anstellung 30 gemäß der Darstellung in Figur 1 zu dem Auftreten von Vibrationen (Hammer-Effekt).

Aus der Darstellung gemäß Figur 1 lässt sich des Weiteren entnehmen, dass innerhalb eines Verbindungsbereichs 42 an der Mantelfläche 34 der Rotorwelle 16 eine Mehrkeilverbindung 46 ausgebildet ist, die mit einer entsprechenden Geometrie an der Innenseite der Getriebeeingangswelle 18 zusammenwirkt.

Eine Vorspannkraft, welche das erste Lager 22 der vorgespannten X-Anstellung 30 in axiale Richtung beaufschlagt, ist durch Position 78 bezeichnet; diese wirkt auch auf das dritte Lager 26, in dem die Rotorwelle 16 drehbar gelagert ist.

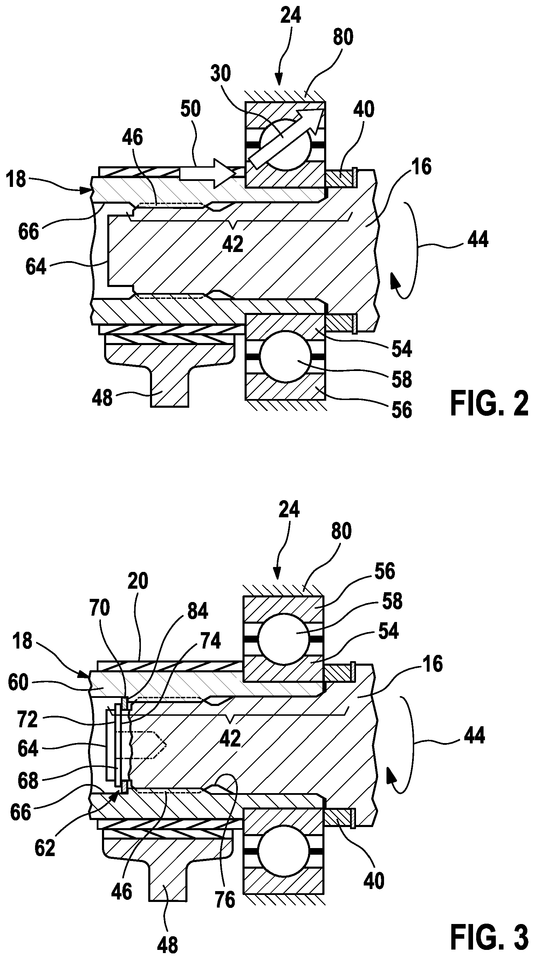

Figur 2 ist zu entnehmen, dass die am Umfang der Getriebeeingangswelle 18 ausgebildete Laufverzahnung 20 mit einem Getriebezahnrad 48 zusammenwirkt. Die Drehmomentübertragung 44 von der Rotorwelle 16 an die Getriebeeingangswelle 18 erfolgt über die Mehrkeilverbindung 46 an eine komplementäre Geometrie, die an einem Innenmantel 66 der Getriebeeingangswelle 18, die als Hohlwelle 60 ausgeführt ist, ausgebildet ist. Innerhalb des Verbindungsbereichs 42 ist eine axiale Führung lediglich durch den Kontaktring 40 gegeben. Mit Bezugszeichen 50 ist eine erste Wirkungsrichtung der Axialkraft beziehungsweise der Axiallast 36 bezeichnet, welche zu den Hammer-Effekten führt.

Aus der Darstellung gemäß Figur 2 geht des Weiteren hervor, dass das hier beispielhaft herausgegriffen dargestellte zweite Lager 24 als Kugellager ausgeführt ist und einen Wälzkörper 58 umfasst, der kugelförmig ausgebildet ist. Die Wälzkörper 58 des zweiten Lagers 24 sind zwischen einem Innenring 54 und einem Außenring 56 des zweiten Lagers 24 aufgenommen. Die vorgespannte X-Anstellung 30 ist in Bezug auf das zweite Lager 24 durch den sich von dessen Innenring 54 zu dessen Außenring 56 schräg verlaufenden Pfeil dargestellt.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

Aus der Darstellung gemäß Figur 3 geht hervor, dass von der Rotorwelle 16, die von der in Figur 3 nicht dargestellten elektrischen Antriebseinrichtung 10 angetrieben ist, eine Drehmomentübertragung 44 innerhalb des Verbindungsbereichs 42 an die als Hohlwelle 60 ausgeführte Getriebeeingangswelle 18 erfolgt. Dazu dient eine an der Mantelfläche 34 der Rotorwelle 16 ausgebildete Mehrkeilverbindung 46, die mit einer komplementär zu der Mehrkeilverbindung 46 ausgebildeten drehmomentübertragenden Geometrie an einem Innenmantel 66 der als Hohlwelle 60 ausgebildeten Getriebeeingangswelle 18 zusammenwirkt. Auf dem Außenumfang der Getriebeeingangswelle 18 befindet sich die Laufverzahnung 20 oder alternativ ein Ritzel. Dieses kämmt mit einem Getriebezahnrad 48 eines hier nicht näher dargestellten Getriebes des Getriebeteils 14 der elektrischen Antriebseinrichtung 10 gemäß Figur 1.

Innerhalb des Verbindungsbereichs 42 zwischen der Getriebeeingangswelle 18 und der Rotorwelle 16 ist die Anordnung durch das zweite Lager 24 abgestützt. Das zweite Lager 24 ist in der Darstellung gemäß Figur 3 beispielsweise als ein Kugellager ausgebildet und umfasst mehrere kugelförmig ausgebildete Wälzkörper 58, die sich zwischen einem Innenring 54 des zweiten Lagers 24 und dessen Außenring 56 befinden. Das zweite Lager 24 ist in einem Gehäuse 80 der elektrischen Antriebseinrichtung 10 gelagert.

Innerhalb des Verbindungsbereichs 42 befindet sich eine Axialverbindung 62. Diese bewirkt eine definierte axiale Position der Getriebeeingangswelle 18 in Bezug auf die Rotorwelle 16 und umgekehrt. Durch das Vorsehen der Axialverbindung 62, die in mehreren Ausführungsvarianten hergestellt werden kann, wird das Auftreten von Vibrationen vermieden, die insbesondere bei der in Figur 1 dargestellten vorgespannten X-Anstellung 30 des ersten Lagers 22 in Bezug auf das zweite Lager 24 auftreten können. Durch das Vorsehen der erfindungsgemäß vorgeschlagenen Axialverbindung 62 innerhalb des Verbindungsbereichs 42 zwischen der Getriebeeingangswelle 18 einerseits und der Rotorwelle 16 andererseits, können Axialkräfte in das Gehäuse 80 abgeleitet werden und führen aufgrund der erfindungsgemäß vorgeschlagenen Axialverbindung 62 nicht mehr zum Auftreten von Vibrationen beziehungsweise hämmernden akustischen Geräuschen im Bereich des Kontaktrings 40 zwischen dem Innenring 54 und einer Schulter der Mantelfläche 34 der Rotorwelle 16.

Der Verbindungsbereich 42 kann beispielsweise einen Haltering 68 umfassen. Der Haltering 68 weist eine erste Stirnseite 72 sowie eine zweite Stirnseite 74 auf und ist beispielsweise in eine Umfangsnut am Umfang der Rotorwelle 16 im Bereich von deren Stirnseite 64 eingelassen. Die Axialverbindung 62 umfasst darüber hinaus ein scheibenförmiges Element 70, beispielsweise ausgebildet als eine Tellerfeder. Der Haltering 68 kann beispielsweise als ebener Ring, als Sprengring, als in Umfangsrichtung gewellter Ring oder als konischer Ring ausgebildet sein. Das scheibenförmige Element 70 wird bevorzugt derart im Innenmantel 66 der als Hohlwelle 60 ausgebildeten Getriebeeingangswelle 18 angeordnet, dass dieser sich an eine Umfangsschulter 84, die am Innenmantel 66 der Hohlwelle 60 ausgebildet ist, abstützt. Die Umfangsschulter 84 kann beispielsweise durch eine Durchmesserreduktion des Durchmessers der Hohlwelle 60 hergestellt sein. Diese hat die Aufgabe, dass sich das scheibenförmige Element 70 in axiale Richtung abstützen kann. Anstelle der in Figur 3 dargestellten Ausführungsvariante der Axialverbindung 62 kann diese auch eine Kontermutter umfassen, die mit einem Sprengring zusammenwirkt. Der Haltering 68 kann in einer weiteren Ausführungsvariante auch mittels einer Schraube an der Stirnseite 64 der Rotorwelle 16, die ein mit ihrer Zentrierbohrung zusammenfallendes Innengewinde aufweisen kann, welches der Befestigung der Tellerfeder oder dergleichen dient. Dadurch kann eine weitere Ausführungsvariante der erfindungsgemäß vorgeschlagenen Axialverbindung 62 dargestellt werden.

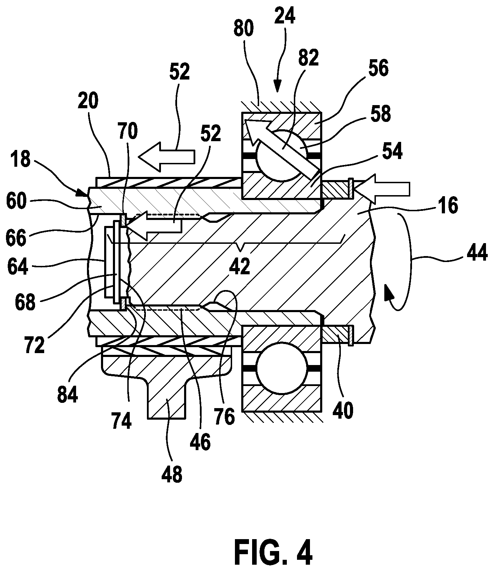

Aus der Darstellung gemäß Figur 3 lässt sich des Weiteren entnehmen, dass die Mehrkeilverbindung 46 am Umfang der Rotorwelle 16 mittels eines Freistichs 76 abgesetzt ist. Die Mehrkeilverbindung 46 zwischen dem Innenmantel 66 der als Hohlwelle 60 ausgebildeten Getriebeeingangswelle 18 dient der Drehmomentübertragung 44, während die Axialverbindung 62 ausschließlich die Axiallasten 36 überträgt, wie dies anhand von Figur 4 dargestellt ist.

Figur 4 zeigt einen sich einstellenden Kraftfluss 82 ausgehend von der Rotorwelle 16, sobald diese zur Drehmomentübertragung 44 in einer ihrer Drehrichtungen angetrieben ist. Die in eine der beiden Wirkungsrichtungen 50, 52 verlaufende Axialkraft wird über die Axialverbindung 62 zwischen der Rotorwelle 16 einerseits und der Getriebeeingangswelle 18 andererseits an das zweite Lager 24 übertragen, wodurch sich der in Figur 4 dargestellte mit Bezugszeichen 82 bezeichnete Kraftfluss in das Gehäuse 80 einstellt. In der

Darstellung gemäß Figur 4 ist das zweite Lager 24 ebenfalls als Wälzlager ausgebildet - hier als Kugellager - mit einem kugelförmigen Wälzkörper 58, der zwischen einem Innenring 54 und einem Außenring 56 läuft, der im Gehäuse 80 aufgenommen ist. In der Ausführungsvariante gemäß Figur 4 umfasst die Axialverbindung 62 neben dem Haltering 68 das scheibenförmige Element 70, das sich an der Umfangsschulter 84 am Innenmantel 66 der Hohlwelle 60 abstützt. Durch die Axialverbindung 62 sind die Positionen der beiden Wellen, d. h. der Getriebeeingangswelle 18 einerseits und der Rotorwelle 16 andererseits in Bezug aufeinander fixiert. Dadurch kann eine definierte Krafteinleitung in das zweite Lager 24 erfolgen. In Bezug auf den in Figur 4 dargestellten Kraftfluss 82, der mit einer der Drehrichtungen der elektrischen Antriebseinrichtung 10 zusammenfällt, verhält es sich bei einem Antrieb der elektrischen Antriebseinrichtung 10 in die entgegengesetzte Richtung gerade umgekehrt. Für diesen Fall wären die in Figur 4 dargestellten Pfeile umzukehren, sodass diese in die entgegengesetzte Richtung weisen.

Auch in Bezug auf die Darstellung gemäß Figur 4 ist anzumerken, dass die Axialverbindung 62 auf verschiedene Art und Weise hergestellt werden kann. Neben der in Figur 4 dargestellten Ausführungsvariante der Axialverbindung 62 mit Haltering 68 und scheibenförmigem Element 70, beispielsweise einer Tellerfeder, lässt sich der Haltering 68 auch mittels einer Schraube an der Stirnseite 64 der Rotorwelle 16 befestigen. Dazu ist ausgehend von der Stirnseite 64 ein Innengewinde konzentrisch zur Rotationsachse der Rotorwelle 16 in diese einzubringen. Des Weiteren kann auch mittels einer Kontermutter ein Sprengring an der Rotorwelle 16 angeordnet werden.

Unbeschadet der Ausführungsvariante der Axialverbindung 62 ist durch diese eine definierte Position der Rotorwelle 16 in Bezug auf die Getriebeeingangswelle 18 herstellbar, sodass anstelle der vibrationsanfälligeren vorgespannten X-Anstellung 30 des ersten Lagers 22 in Bezug auf das zweite Lager 24 eine Fest-Los-Lagerung verwirklicht werden kann. Diese ist hinsichtlich des Ableitens von Axialkräften in das Gehäuse 80 wesentlich robuster und aufgrund der erfindungsgemäß vorgeschlagenen Axialverbindung 62 dazu geeignet, diese in das Gehäuse 80 abzuleiten. Dadurch wird der Fahrkomfort bei Rückwärtsfahrt und bei Vorwärtsfahrt der elektrischen Antriebseinrichtung 10 eines elektrisch angetriebenen Fahrzeugs erheblich verbessert.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Elektrische Antriebseinrichtung (10) mit einem E-Maschinenteil (12) und einem Getriebeteil (14), wobei eine Rotorwelle (16) mit einer Getriebeeingangswelle (18) innerhalb eines Verbindungsbereichs (42) derart gekoppelt ist, dass eine Drehmomentübertragung (44) erfolgt, wobei in dem Verbindungsbereich (42) eine Axialverbindung (62) zwischen der Rotorwelle (16) und der Getriebeeingangswelle (18) ausgebildet ist, wobei die Getriebeeingangswelle (18) als Hohlwelle (60) ausgeführt ist, deren Innenmantel (66) im Verbindungsbereich (42) die Rotorwelle (16) umschließt, wobei die Axialverbindung (62) einen Haltering (68) aufweist, der auf der Rotorwelle (16) aufgenommen ist und ein scheibenförmiges Element (70) abstützt, wobei das scheibenförmige Element (70) an einer Umfangsschulter (84) des Innenmantels (66) der Getriebeeingangswelle (18) anliegt und als Tellerfeder ausgeführt ist.

2. Elektrische Antriebseinrichtung (10) gemäß Anspruch 1, **dadurch gekennzeichnet, dass** der Haltering (68) als ebener Ring, als in Umfangsrichtung gewellter Ring oder als konischer Ring ausgeführt ist.

3. Elektrische Antriebseinrichtung (10) gemäß den Ansprüchen 1 bis 2, **dadurch gekennzeichnet, dass** die Axialverbindung (62) eine Kontermutter mit Sprengring umfasst.

4. Elektrische Antriebseinrichtung (10) gemäß Anspruch 1, **dadurch gekennzeichnet, dass** die Tellerfeder mittels einer Schraubverbindung an einer Stirnseite (64) der Rotorwelle (16) befestigt ist.

5. Elektrische Antriebseinrichtung (10) gemäß Anspruch 1, **dadurch gekennzeichnet, dass** die Umfangsschulter (84) am Innenmantel (66) der Getriebeeingangswelle (18) als Durchmesserverringerung ausgeführt ist.

6. Elektrische Antriebseinrichtung (10) gemäß den Ansprüchen 1 bis 5, **dadurch gekennzeichnet, dass** durch die Axialverbindung (62) zwischen der Rotorwelle (16) und der Getriebeeingangswelle (18) ein Kraftfluss (82) durch ein zweites Lager (24) in ein Gehäuse (80) erfolgt.

7. Elektrische Antriebseinrichtung (10) gemäß Anspruch 6, **dadurch gekennzeichnet, dass** durch die Axialverbindung (62) zwischen der Rotorwelle (16) und der Getriebeeingangswelle (18) ein Kraftfluss (82) durch das zweite Lager (24) entsprechend einer Drehrichtung der Rotorwelle (16) erfolgt.

8. Verwendung der elektrischen Antriebseinrichtung (10) nach einem der Ansprüche 1 bis 7 in einem elektrisch angetriebenen Fahrzeug, insbesondere einem elektrisch angetriebenen Personenkraftwagen oder einem elektrisch angetriebenen leichten Nutzfahrzeug.

## Claims

1. Electrical drive device (10) comprising an electric machine part (12) and a gearbox part (14), wherein a rotor shaft (16) is coupled to a gearbox input shaft (18) within a connecting region (42) in such a way that torque transmission (44) occurs, wherein an axial connection (62) is formed between the rotor shaft (16) and the gearbox input shaft (18) in the connecting region (42), wherein the gearbox input shaft (18) is designed as a hollow shaft (60), the inner lateral surface (66) of which surrounds the rotor shaft (16) in the connecting region (42), wherein the axial connection (62) has a retaining ring (68) which is mounted on the rotor shaft (16) and supports a disc-shaped element (70), wherein the disc-shaped element (70) rests against a circumferential shoulder (84) of the inner lateral surface (66) of the gearbox input shaft (18) and is designed as a plate spring.

2. Electrical drive device (10) according to Claim 1, **characterized in that** the retaining ring (68) is designed as a flat ring, as a ring with a corrugation in the circumferential direction or as a conical ring.

3. Electrical drive device (10) according to Claims 1 and 2, **characterized in that** the axial connection (62) comprises a locknut with snap ring.

4. Electrical drive device (10) according to Claim 1, **characterized in that** the plate spring is fastened to an end side (64) of the rotor shaft (16) by means of a screw connection.

5. Electrical drive device (10) according to Claim 1, **characterized in that** the circumferential shoulder (84) on the inner lateral surface (66) of the gearbox input shaft (18) is designed as a portion of reduced diameter.

6. Electrical drive device (10) according to Claims 1 to 5, **characterized in that** a force flow (82) occurs through a second bearing (24) into a housing (80) owing to the axial connection (62) between the rotor shaft (16) and the gearbox input shaft (18).

7. Electrical drive device (10) according to Claim 6, **characterized in that** a force flow (82) occurs through the second bearing (24) in accordance with a direction of rotation of the rotor shaft (16) owing to the axial connection (62) between the rotor shaft (16) and the gearbox input shaft (18).

8. Use of the electrical drive device (10) according to any of Claims 1 to 7 in an electrically driven vehicle, in particular an electrically driven passenger car or an electrically driven light commercial vehicle.

## Revendications

1. Dispositif d'entraînement électrique (10) comprenant une partie moteur électrique (12) et une partie transmission (14), dans lequel un arbre de rotor (16) est relié à un arbre (18) d'entrée de transmission à l'intérieur d'une zone de liaison (42) de telle sorte qu'une transmission de couple (44) ait lieu, une liaison axiale (62) étant formée dans la zone de liaison (42) entre l'arbre de rotor (16) et l'arbre (18) d'entrée de transmission, l'arbre (18) d'entrée de transmission étant réalisé sous la forme d'un arbre creux (60) dont l'enveloppe intérieure (66) entoure l'arbre de rotor (16) dans la zone de liaison (42), la liaison axiale (62) comportant une bague de retenue (68) qui est reçue sur l'arbre du rotor (16) et qui comprend un élément en forme de disque (70), l'élément en forme de disque (70) s'appuyant sur un épaulement périphérique (84) de la paroi intérieure (66) de l'arbre (18) d'entrée de transmission et étant réalisé sous la forme d'une rondelle élastique.

2. Dispositif d'entraînement électrique (10) selon la revendication 1, **caractérisé en ce que** la bague de retenue (68) est réalisée sous la forme d'une bague plane, d'une bague ondulée dans la direction circonférentielle ou d'une bague conique.

3. Dispositif d'entraînement électrique (10) selon les revendications 1 à 2, **caractérisé en ce que** la liaison axiale (62) comprend un contre-écrou avec anneau élastique.

4. Dispositif d'entraînement électrique (10) selon la revendication 1, **caractérisé en ce que** le ressort à disque est fixé par de fixation à une face frontale (64) de l'arbre de rotor (16) au moyen d'une liaison vissée.

5. Dispositif d'entraînement électrique (10) selon la revendication 1, **caractérisé en ce que** l'épaulement périphérique (84) sur l'enveloppe intérieure (66) de l'arbre (18) d'entrée de transmission est réalisé sous la forme d'une réduction de diamètre.

6. Dispositif d'entraînement électrique (10) selon les revendications 1 à 5, **caractérisé en ce que**, grâce à la liaison axiale (62) entre l'arbre du rotor (16) et l'arbre (18) d'entrée de la transmission, un flux de force (82) est transmis à travers un deuxième palier (24) dans un boîtier (80).

7. Dispositif d'entraînement électrique (10) selon la revendication 6, **caractérisé en ce que**, grâce à la liaison axiale (62) entre l'arbre du rotor (16) et l'arbre (18) d'entrée de transmission un flux de force (82) est transmis à travers le deuxième palier (24), correspondant au sens de rotation de l'arbre du rotor (16).

8. Utilisation du dispositif d'entraînement électrique (10) selon l'une des revendications 1 à 7 dans un véhicule à entraînement électrique, en particulier une voiture particulière à entraînement électrique ou un véhicule utilitaire léger à entraînement électrique.
